# EUROPÄISCHE PATENTSCHRIFT

(11) **EP 1 690 581 B1**
(45) Veröffentlichungstag und Bekanntmachung des Hinweises auf die Patenterteilung: **22.08.2007**
(21) Anmeldenummer: 06101324.9
(22) Anmeldetag: 06.02.2006
(51) Int. Cl.: B01D 35/31, B01D 35/30

(54) **Flüssigkeitsfiltersystem**
Filter sytem for liquids
Système de filtration à liquide

(30) Priorität: 15.02.2005 DE 102005007024
(43) Veröffentlichungstag der Anmeldung: 16.08.2006
(73) Patentinhaber: MANN+HUMMEL GmbH, 71638 Ludwigsburg (DE)
(72) Erfinder: Wolf, Michael, 66539 Neunkirchen (DE); Münkel, Karlheinz, 75038 Oberderdingen-Flehingen (DE); Stinzendörfer, Joachim, 67346 Speyer (DE); Bauder, Ralf, 68775 Ketsch (DE); Maurer, Norbert, 67346 Speyer (DE)

(56) Entgegenhaltungen:
- EP-A- 1 188 469
- US-A- 4 707 168
- US-A- 4 774 853
- US-A- 4 842 737
- US-A- 5 128 034
- PATENT ABSTRACTS OF JAPAN Bd. 1998, Nr. 02, 30. Januar 1998 (1998-01-30) & JP 09 267005 A (TENETSUKUSU:KK), 14. Oktober 1997 (1997-10-14)

## Beschreibung

Die Erfindung betrifft ein Flüssigkeitsfiltersystem, vorzugsweise Ölfilter für eine Brennkraftmaschine, mit einem becherförmigen Gehäuse, das lösbar mit einem Aufnahmekopf verbindbar ist, und mit einem in dem Gehäuse anzuordnenden Filterelement.

Bekannte Fluidfilter, insbesondere Ölfilter für eine Brennkraftmaschine, sind im Stand der Technik in zwei verschiedenen Varianten bekannt. Einerseits werden so genannte Spin-On-Filter eingesetzt, wobei der Spin-On-Filter aus einem becherförmigen Gehäuse, einem darin unlösbar angeordneten Filterelement und einer Abschlussplatte, welche ein Gewinde aufnimmt, aufgebaut ist. Das becherförmige Gehäuse besteht hierbei aus einem Metall, um die im Betrieb der Brennkraftmaschine auftretenden Druckpulsation im Inneren des Filters aufnehmen zu können. Der Spin-On-Filter wird auf einen Aufnahmeflansch, oder direkt an den Motorblock der Brennkraftmaschine angeschraubt und im Wartungsfall komplett durch einen neuen Spin-On-Filter ersetzt. Dieses beinhaltet allerdings Nachteile, welche sich aus dem Materialmix des Filters ergeben, da hier eine Mischung aus Kunststoffen, Papier und Metall entsorgt werden müssen, wobei die Entsorgung im Sinne einer Materialtrennung problematisch ist.

Weiterhin sind so genannte Ölmodule im Stand der Technik bekannt, bei denen ein Filterelement lösbar in einem bevorzugt becherförmig ausgebildeten Gehäuse angeordnet ist, das mit Hilfe dieses Gehäuses wiederum an einen Aufnahmekopf, welcher sich im Kreislauf befindet, angeschraubt werden. Im Wartungsfall ist hier nur die metallfreie Filterpatrone zu ersetzen, und das becherförmige Gehäuse ist als Lebensdauerbauteil ausgeführt.

Die DE 200 04 31 U1 zeigt einen Flüssigkeitsfilter mit Umgehungsventil. Hierbei ist ein hohlzylindrisches Filterelement innerhalb eines becherförmigen Gehäuses lösbar angeordnet, wobei das becherförmige Gehäuse in einem Anschlusskopf eingeschraubt wird. Konzentrisch im Inneren des Filterelementes ist ein Stützrohr angeordnet, welches ein Umgehungsventil aufnimmt. Als nachteilig erweist sich hier der Wechsel des Filterelementes, bei dem die Gefahr der Verschmutzung der direkten Umgebung des Ölfilterelementes besteht, da das ölgetränkte Filtermedium beim Wechsel noch Restöl beinhaltet und dieses abtropfen kann. Außerdem besteht der Nachteil, dass die Hände des Bedienpersonals durch direkten Kontakt mit dem ölgetränkten Filterelement verschmutzt werden.

Ein weiterer Nachteil besteht daran, dass bei einer Montage des äußeren Gehäuses bei nur flüchtigem Hinsehen nicht erkennbar ist, ob überhaupt ein Filtermedium eingesetzt ist. Sichtbar wird dies nur beim Blick auf die offene Unterseite des Gehäuses, die aber in der Mehrzahl der Fälle bei der Montage nach unten weisend, unzugänglich in einem Motorraum, verdeckt oder dgl. anzubringen ist.

Aufgabe der Erfindung ist es daher, ein Flüssigkeitsfiltersystem der eingangs genannten Art so zu verbessern, dass Filtereinsatz und Gehäuse einfach und lagerichtig zueinander montierbar sind und dass zugleich am Außenumfang deutlich erkennbar ist, ob ein Filterelement ins Gehäuse eingesetzt ist.

Diese Aufgabe wird erfindungsgemäß bei einem Filtersystem mit den Merkmalen des Oberbegriffs des Anspruchs 1 dadurch gelöst, dass
- das Gehäuse mit ersten Formschlusselementen versehen ist, die sich über wenigstens einen Teil des Außenumfangs des Gehäuses und/oder dessen Unterkante erstrecken, wobei
- die Formschlusselemente durch jeweils wenigstens eine sich axial erstreckende Ausnehmung unterbrochen sind oder
- seitlich benachbart eine sich axial erstreckende Ausnehmung aufweisen; und
- das Filterelement eine flüssigkeitsdichte Ummantelung aufweist, die an ihrer Außenseite und/oder ihrer Unterkante mit zweiten Formschlusselementen versehen ist, welche beim Einsetzen des Filterelements in das Gehäuse in die Ausnehmungen in den ersten Formschlusselementen einsetzbar sind.

Durch die flüssigkeitsdichte Ummantelung kann das Filterelement einfach und sauber als auswechselbarer Einsatz dem Gehäuse entnommen werden. Ein neues Filterelement wird über das Ineinandergreifen der zweiten Formschlusselemente an der Ummantelung des Filterelements und der Ausnehmungen an den ersten Formschlusselementen des Gehäuses lagerichtig positioniert, und zwar sowohl im Hinblick auf die Winkelstellung der beiden Teile zueinander wie auch auf deren axiale Positionierung.

Würde das innen liegende Filterelement fehlen, so würde dies über die deutlich erkennbaren, da in diesem Fall nicht ausgefüllten Ausnehmungen in den ersten Formschlusselementen des Gehäuses dem Bediener visuell angezeigt.

Dadurch, dass sich die Formschlusselemente zu einem einheitlichen Formschlusselement ergänzen, werden Filterelement und Gehäuse gleichzeitig mit dem Aufnahmekopf des Flüssigkeitsfiltersystem verbunden, insbesondere mit diesem verrastet.

In einer bevorzugten Ausführungsform ergänzen sich die ersten und zweiten Formschlussmittel jeweils zu einem am Außenumfang des Gehäuses angeordneten Steg mit Anlaufschräge. Die Stege sind in bogenförmige Ausnehmungen im Aufnahmekopf einsetzbar und dann gegeneinander um einen bestimmten Winkel verdrehbar, so dass über die Stege und die bogenförmigen Ausnehmungen eine Bajonettverbindung herstellbar ist. Die Anlaufschräge bewirkt eine axiale Verspannung, wenn sie unter einen entsprechenden Vorsprung am Aufnahmekopf gleitet. Mit einer leichten Drehbewegung wird das Gehäuse samt Filterelement an den Aufnahmekopf heran gedrückt und abgedichtet, so dass das Filtersystem einsatzbereit ist. Damit werden auch am Aufnahmekopf angeordnete Zu- und Ablaufkanäle mit den entsprechenden Fließwegen im Filterelement gekoppelt.

Um die gleichzeitige Verspannung und damit Abdichtung beider Teile zu erreichen, sind die Ausnehmungen und zweiten Formschlusselemente so kongruent zueinander ausgebildet, dass ein einheitlich erscheinendes Formschlusselement am Außenumfang des Gehäuses gebildet wird, das dann mit entsprechenden Gegenstücken am Aufnahmekopf gekoppelt werden kann. Der Außendurchmesser der zweiten Formschlusselemente entspricht in dieser Ausführungsform dem Außendurchmesser der ersten Formschlusselemente und die Bogenlänge der zweiten Formschlusselemente entspricht der Bogenlänge der Ausnehmung in den ersten Formschlusselementen.

Um das Filtersystem zusätzlich gegen Leckagen abzusichern, insbesondere im Fall eines Bruchs der Ummantelung des Filterelements, kann zwischen der Ummantelung und dem Gehäuse wenigstens ein Ringdichtungselement angeordnet ist. Am Filterelement austretende Flüssigkeit wird dann im Zwischenraum zwischen der Innenseite des becherförmigen Gehäuses und der Ummantelung aufgefangen.

Das Ringdichtungselement kann als normaler O-Ring ausgebildet sein oder es kann als Dichtungskragen aus einem elastomeren Werkstoff an den Außenumfang des Filterelements angeformt sein.

Um Filterelement und Gehäuse lagerichtig miteinander zu verbinden, können die Ausnehmungen in den ersten Formschlusselementen und die darin eingreifenden zweiten Formschlusselemente in einer nicht symmetrischen Winkelteilung angeordnet sein, so dass der Benutzer die beiden Teile nur in der vorbestimmten Lage miteinander kombinieren kann.

Soweit nicht eine bestimmte Winkelpositionierung des Gehäuses gegenüber dem Aufnahmekopf notwendig ist, sind zur Erleichterung der Montage die durch die ersten und zweiten Formschlusselemente gebildeten Stege in einer symmetrischen Winkelteilung angeordnet. Diese Ausbildung kann auch in Kombination mit der vorstehend dargelegten asymmetrischen Anordnung der ersten und zweiten Formschlusselemente vorgesehen sein: während dann Filterelement und Gehäuse nur in besondere Weise ineinander positionierbar sind, kann die Einheit aus Filterelement und Gehäuse zusammen in jeder Winkelstellung am Anschlusskopf befestigt werden.

Insbesondere zur einfachen Entsorgung eines ausgetauschten Filterelements kann dieses an der offenen Seite seiner Ummantelung mit wenigstens einem abklappbaren Griffelement versehen ist.

Vorzugsweise ist ein solches Griffelement aus zwei halbkreisförmigen Teilgriffelementen aus Kunststoff gebildet, die entlang eines Durchmessers der Ummantelung an einem Folienscharnier biegsam miteinander verbunden sind. Damit wird ein zentral zu montierender Scheibenkörper geschaffen, der große Durchbrechungen aufweist, um einerseits die Verbindung mit Zu- und Ablauf am Anschlusskopf zu ermöglichen und andererseits leicht gegriffen werden zu können. Die beiden Halbkreise können an dem Folienscharnier aus der ursprünglichen Lage senkrecht zur Längsachse des Filterelements abgeklappt werden.

Das erfindungsgemäße Flüssigkeitsfiltersystem ist insbesondere für ein Filterelement geeignet, das einen Filtereinsatzkörper aufweist, der aus einem Flächengebilde gewickelt ist, und zwar einem solchen, welches aus einer plissierter Filterlage besteht, die einseitig entlang ihrer Knickkanten mit einer Decklage verklebt ist, wie es aus der DE 196 28 060 A1 grundsätzlich bekannt ist. Im Gegensatz zu bekannten Faltenfilter-Einsatzkörpern findet dabei die Durchströmung nicht hauptsächlich nur radial, sondern auch axial statt, so dass der Filtereinsatzkörper insgesamt großen axialen Kräften ausgesetzt ist. Dadurch, dass eine lagerichtige Ausrichtung des Filterelements im Gehäuse erfindungsgemäß gewährleistet ist, ist es möglich, Stützbleche oder dgl. zur Aufnahme der axialen Kräfte am Faltenfilterpaket vorzusehen, ohne dass dabei Strömungswege durch fehlerhafte Ausrichtung unbeabsichtigt versperrt werden könnten.

Ist eine Kopplung der Formschlusselemente mit dem Aufnahmekopf als Bajonettverbindung vorgesehen, so ist es besonders vorteilhaft, am Aufnahmekopf wenigstens einen radial verschiebbaren, federnd gelagerten Rastbolzen vorzusehen, der in eine der bogenförmigen Ausnehmungen hinein ragt. Außerdem sollte dann vorgesehen sein, dass die Stege jeweils an wenigstens einer ihrer Seitenkanten eine Anschrägungsfläche aufweisen, durch die das Rastbolzenelement auslenkbar ist. Wird das Gehäuse samt eingesetztem Filterelement mit seinen aus dem Formschlusselementen einheitlich zusammengesetzten Stegen in die Aufnahmenuten am Aufnahmekopf gesteckt und um einen Winkel in Bezug auf die Mittelachse des Gehäuses gedreht, so schieben die Formschlusselemente an den Anlaufschrägen den Rastbolzen zurück und die Verbindung zwischen Gehäuse und Aufnahmekopf wird hergestellt. Wird jedoch versehentlich vergessen, ein Filterelement in das Gehäuse einzusetzen, so ist dies nicht nur optisch erkennbar, sondern es wird sogar aktiv verhindert, dass eine Verbindung des Gehäuses mit dem Aufnahmekopf herstellbar ist: der Rastbolzen federt nämlich in diesem Fall in die für die zweiten Formschlusselemente vorgesehene Ausnehmung innerhalb der oder neben den ersten Formschlusselementen ein, so dass das Gehäuse nicht bis in seine Endposition gedreht werden kann. Der Rastbolzen liegt in der Nut, die sich axial bis zur Unterkante des Gehäuses erstreckt, so dass das Gehäuse in dieser blockierten einfach wieder axial abgezogen werden kann.

Falls nun noch axial wirkende Federelemente zwischen den Stirnseiten von Aufnahmekopf und Gehäuseunterseite vorgesehen sind, wird das solchermaßen fehlerhaft montierte Gehäuse vom Aufnahmekopf abgestoßen, so dass es dem Bediener auch nicht möglich ist, dass Gehäuse ohne Filterelement in der blockierten Position am Aufnahmekopf aufgesteckt zu lassen.

Die Erfindung wird nachfolgend anhand eines Ausführungsbeispiels und mit Bezug auf die Zeichnung näher erläutert. Die Figuren zeigen im Einzelnen:
- Fig. 1: das Filterelement in perspektivischer Darstellung;
- Fig. 2: Gehäuse und Filterelement in Ansicht von unten;
- Fig. 3: Gehäuse und Filterelement in perspektivischer Darstellung;
- Fig. 4: das Gehäuse in perspektivischer Darstellung;
- Fig. 5: das Flüssigkeitsfiltersystem im Längsschnitt;
- Fig. 6: das Flüssigkeitsfiltersystem im Querschnitt entlang der Linie VI-VI in Fig. 5 und
- Fig. 7: Gehäuse und eine zweite Ausführungsform eines Filterelements im Längsschnitt.

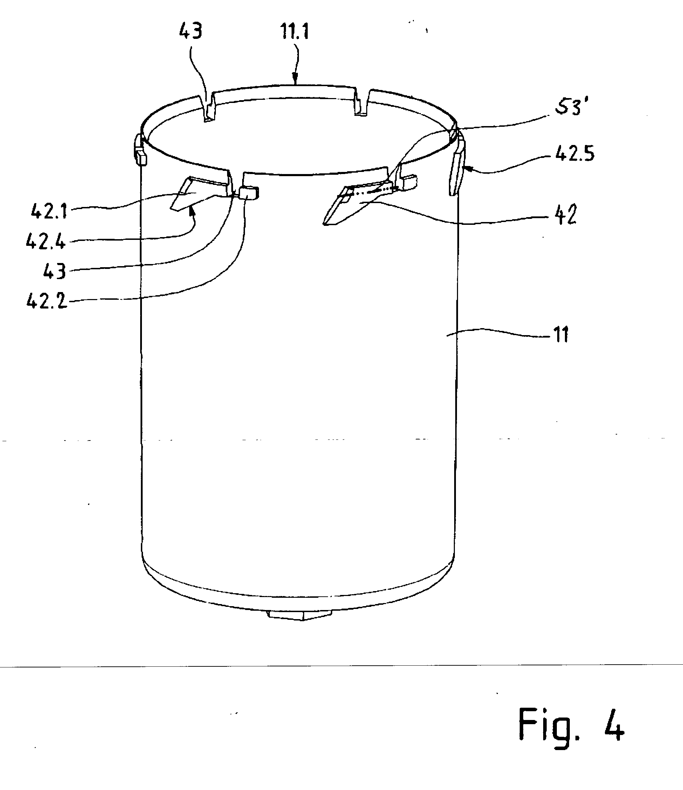

Fig. 4 zeigt ein Gehäuse 11 für das erfindungsgemäße Filtersystem, das im Wesentlichen topf- oder becherförmig ausgebildet ist. Eine Unterkante 11.1, die in Fig. 4 nach oben weisend abgebildet ist, weist an ihrem Umfang mehrere Ausnehmungen 43 auf. Nahe der Unterkante des Gehäuses 11 und an dessen Außenumfang verteilt sind bei dem dargestellten Ausführungsbeispiel insgesamt sechs erste Formschlusselemente 42. Die Ausnehmungen 43 erstrecken sich jeweils so weit in axialer Richtung, dass sie die ersten Formschlusselemente 42 durchbrechen.

Die ersten Formschlusselemente 42 sind durch die Ausnehmungen 43 in Teilbereiche 42.1, 42.2 unterteilt. Am Teilbereich 42.1 ist eine Auflaufschräge 42.4 angeformt.

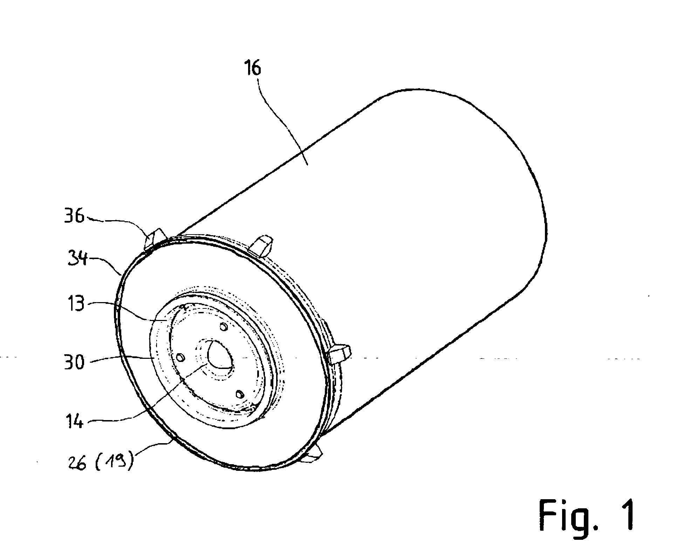

Fig. 1 zeigt ein Filterelement 19 im Blick auf die Unterseite mit einer ringförmigen Abschlussfläche 26. Im Zentrum ist ein zentrales Stützrohr 14 angeordnet, das auch als Zulauf in das Filterelement 19 dient. Die Flüssigkeit kann durch Auslauföffnungen 13 wieder ausströmen, welche im Bereich zwischen dem Stützrohr 14 und einem Kragen 30 angeordnet sind. Erfindungswesentlich sind die außenumfänglich angeordneten zweiten Formschlusselemente 36.

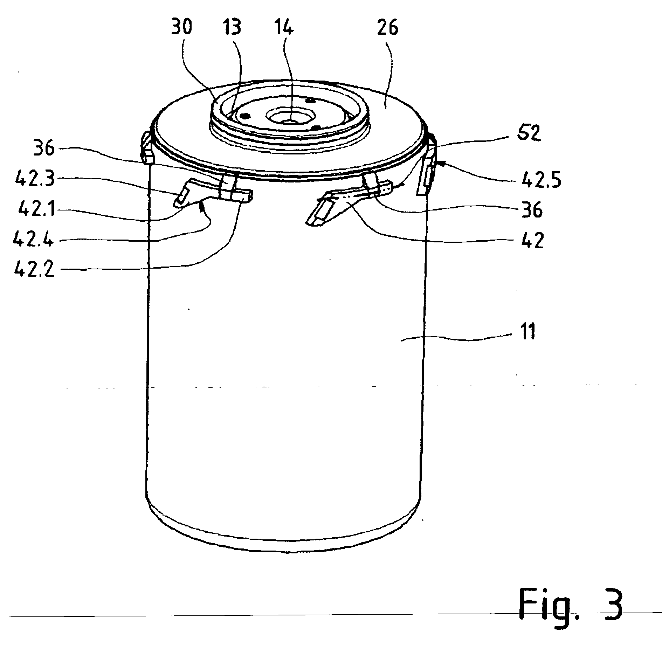

Das erfindungsgemäße Zusammenwirken der ersten und zweiten Formschlusselemente 42, 36 wird insbesondere durch die perspektivische Darstellung auf ein Gehäuse 11 mit eingesetzten Filterelement 19 in Fig. 3 deutlich. Die zweiten Formschlusselemente 36 des Filterelements 19 ergänzen die durch die Ausnehmungen 43 im Gehäuse 11 unterbrochenen ersten Formschlusselemente 42 so dass jeweils ein einheitlicher Steg an der Außenseite des Gehäuses 11 gebildet ist. Es ergibt sich durch das nahtlose Einfüge der zweiten Formschlusselemente 36 eine bündige Außenfläche 42.5 an den Stegen.

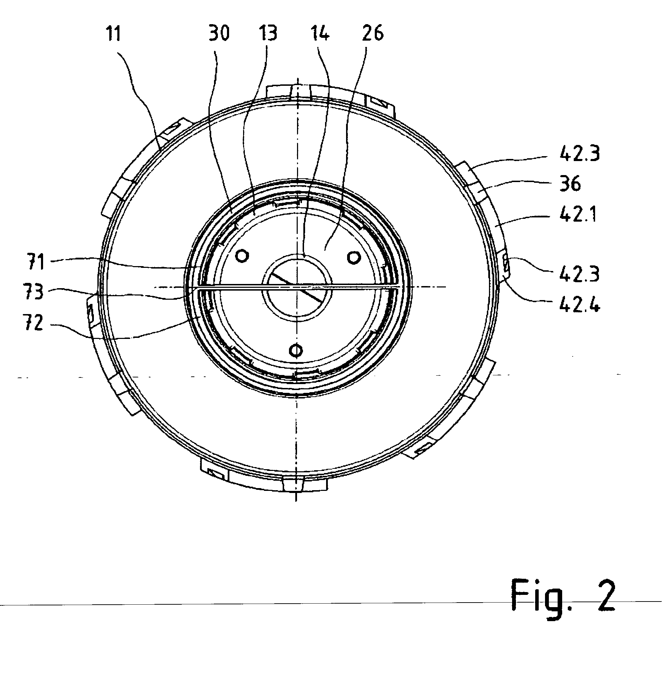

Fig. 2 zeigt den Zusammenbau gemäß Fig. 4 in Ansicht von oben. Auch hieraus ist noch einmal erkennbar, wie sich die zweiten Formschlusselemente 36 sowohl in umfänglicher wie auch in radialer Erstreckung genau an die ersten Formschlusselemente 42 und deren Ausnehmungen 43 angepasst sind, so dass sich ein einheitlicher Steg ergibt, der bei der dargestellten bevorzugten Ausführungsform zur Herstellung einer Bajonettverbindung mit einem Aufnahmekopf vorgesehen ist.

Innerhalb des Kragens 30 ist noch ein Griffelement angeordnet, das zunächst scheibenförmig aus zwei halbkreisbogenförmige Teilgriffelemente 71, 72 gebildet ist, welche an einem Folienscharnier 73 mit ihren geraden Basen miteinander verbunden sind. Die Teilgriffelemente 71, 72 können an dem Folienscharnier 73 abgeklappt und aufgerichtet werden, so dass sie von der Unterseite von Gehäuse 11 und Filterelement 19 abstehen und leicht gegriffen werden können.

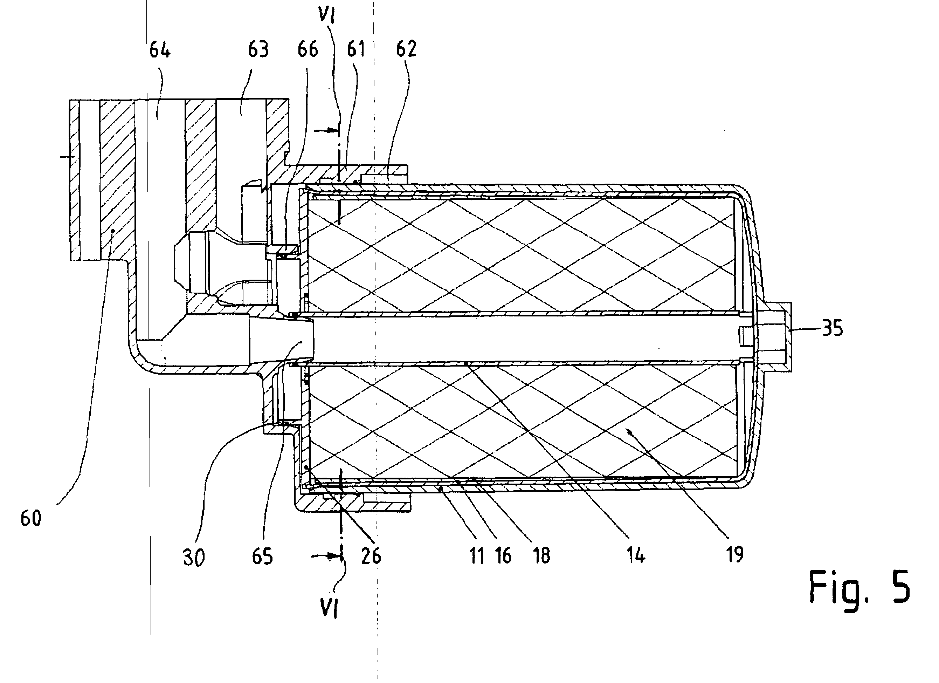

Fig. 5 zeigt ein vollständiges Flüssigkeitsfiltersystem der Erfindung. Das Gehäuse 11 mit eingesetztem Filterelement 19 ist mit einem Aufnahmekopf 61 gekoppelt, der an seinem Innenumfang mit bogenförmigen Nuten 62 zur Herstellung einer Bajonettverbindung versehen ist. An den Aufnahmekopf 61 schließt sich ein Flanschgehäuse 60 an, in dem Rücklauf- und Zulaufleitungen 63, 64 integriert sind, die zu den Zu- und Rücklaufleitungen 13, 14 des Filterelements 19 führen.

Das Stützrohr 14 enthält endseitig am Innenumfang einen Dichtungsring und wird beim Herstellen der Bajonettverbindung zwischen Gehäuse 11 und Aufnahmekopf 61 auf einen Trichterstutzen 65 aufgeschoben. Zugleich wird der Kragen 30 am Abschlusselement 26 mittels eines zwischen liegenden Dichtrings mit dem Innenumfang eines Kragens 66 bzw. einer Vertiefung im Aufnahmekopf 61 dichtend verbunden, so dass auch der Rücklaufbereich gegenüber der Umgebung abgedichtet ist.

Das Filterelement 19 ist von einer becherförmigen Ummantelung 16 umgeben. Der eigentliche Filterstoff oder der eigentliche Filtereinsatzkörper, beispielsweise ein gewickelter Kompaktfiltereinsatz aus plissiertem Filterpapier, ist über eine Vergussmasse 18 fest mit der Ummantelung 16 verbunden.

Die Ummantelung 16 spannt einen Hohlraum über dem Filtereinsatzkörper auf. Das Stützrohr 14 ist hier mit Ausnehmungen versehen. Die zu filternde Flüssigkeit wird über die Ausnehmungen in den Hohlraum geleitet und fließt von dort durch den Filtereinsatzkörper.

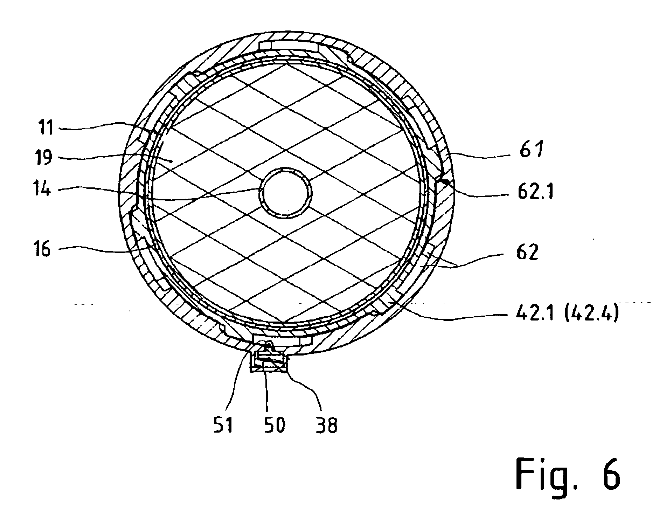

Fig. 6 zeigt einen Schnitt entlang der Linie VI-VI in Fig. 5. Dabei sind die erste Formschlusselemente 42 des Gehäuses in ihrem ersten Teilbereich 42.1 mit der Auflaufschräge 42.4 geschnitten und liegen innerhalb der Aufnahmenuten 62 des Aufnahmekopfes 61. Die Aufnahmenuten 62 weisen Schrägen 62.1 auf, durch die beim Schließen der Bajonettverbindung eine zusätzliche Zentrierung des Gehäuses 11 mit Filterelement 19 in Bezug auf den Aufnahmekopf 61 erreicht wird.

In wenigstens eine der Aufnahmenuten 62 ragt ein Rastbolzen 51 hinein, der durch eine Druckfeder 50 in dieser Position gehalten wird. Um Raum für den Rastbolzen 51 zu schaffen, kann ein kleines Zusatzgehäuse 38 außen am Aufnahmekopf 61 vorgesehen sein.

Durch die strichpunktierte Linie 52 in Fig. 3 ist der Weg des Rastbolzens 51 über die Außenfläche 42.5 der Formschlusselemente 42, 36 bei bestimmungsgemäßer Verwendung von Gehäuse 11 mit Filterelement 19 angedeutet. Der Rastbolzen 51 wird vorne an der Anlaufschräge 42.3 radial nach außen geschoben und streift über die Formschlusselemente 42, 36 hinweg.

Wird hingegen kein Filterelement 19 in das Gehäuse 11 eingesetzt, dann endet der Weg des Rastbolzens 51 in der Ausnehmung 43 innerhalb des ersten Formschlusselements 42, wie in Fig. 4 durch die strichpunktierte Linie 52' dargestellt. Der Rastbolzen 51 springt infolge der Kraft der Feder 50 in die Ausnehmung 43 und blockiert diese.

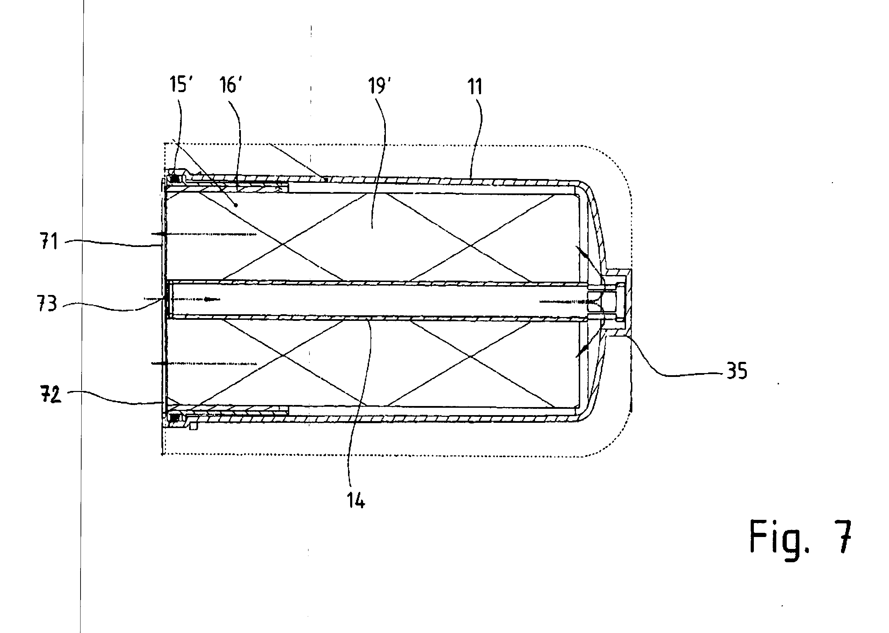

Fig. 7 zeigt wiederum das Gehäuse 11. Eingesetzt darin ist eine zweite Ausführungsform einen Filterelement 19', bei der die Ummantelung 16' nicht becherförmig ist, sondern nur als ein Ring im Endbereich ausgebildet ist. Über ein Ringdichtungselement 15' ist das Filterelement 19' gegenüber dem Gehäuse 11 abgedichtet. Diese Teilummantelung 16' reduziert die Menge zu entsorgender Kunststoffe und kann insbesondere dann vorgesehen sein, wenn das zu filternde Medium relativ sauber handhabbar ist, beispielsweise Benzin oder Wasser mit Schwebstoffen. In diesem Fall kann zugunsten einer Materialeinsparung auf die ansonsten vorteilhafte, zuvor mit Bezug auf die Fig. 1 bis 6 dargestellte Kapselung des Filterelements 19 verzichtet werden.

## Patentansprüche

1. Flüssigkeitsfiltersystem, vorzugsweise Ölfilter oder Kraftstofffilter für eine Brennkraftmaschine, mit einem becherförmigen Gehäuse (11), das lösbar mit einem Aufnahmekopf (61) verbindbar ist, und mit einem in dem Gehäuse (11) anzuordnenden Filterelement (19), **dadurch gekennzeichnet, dass**
- das Gehäuse (11) mit ersten Formschlusselementen (42) versehen ist, die sich über wenigstens einen Teil des Außenumfangs des Gehäuses (11) und/oder dessen Unterkante erstrecken und
o die durch jeweils wenigstens eine sich axial erstreckende Ausnehmung (43) unterbrochen sind oder
o die seitlich benachbart eine sich axial erstreckende Ausnehmung aufweisen;
- und das Filterelement (19) eine flüssigkeitsdichte Ummantelung (16, 16') aufweist, die an ihrer Außenseite und/oder ihrer Unterkante mit zweiten Formschlusselementen (36) versehen ist, welche beim Einsetzen des Filterelements in das Gehäuse (11) in die Ausnehmungen (43) in den ersten Formschlusselementen (42) einsetzbar sind.

2. Flüssigkeitsfiltersystem nach Anspruch 1, **dadurch gekennzeichnet, dass** die ersten und zweiten Formschlussmittel sich jeweils zu einem am Außenumfang des Gehäuses (11) angeordneten Steg mit einer Auflaufschräge (42.4) ergänzen, welche Stege in bogenförmige Ausnehmungen (62) im Aufnahmekopf (61) einsetzbar ist, wobei über die Stege und die bogenförmigen Ausnehmungen (62) eine Bajonettverbindung herstellbar ist.

3. Flüssigkeitsfiltersystem nach Anspruch 1 oder 2, **dadurch gekennzeichnet, dass** der Außendurchmesser der zweiten Formschlusselemente (36) dem Außendurchmesser der ersten Formschlusselemente (42) entspricht und dass die Bogenlänge der zweiten Formschlusselemente (36) der Bogenlänge der Ausnehmung (43) in den ersten Formschlusselementen (42) entspricht.

4. Flüssigkeitsfiltersystem nach einem der Ansprüche 1 bis 3, **dadurch gekennzeichnet, dass** zwischen der Ummantelung (16') des Filterelements (1'9) und dem Gehäuse (11) wenigstens ein Ringdichtungselement (15') angeordnet ist.

5. Flüssigkeitsfiltersystem nach Anspruch 4, **dadurch gekennzeichnet, dass** das Ringdichtungselement als Dichtungskragen aus einem elastomeren Werkstoff an den Außenumfang des Filterelements angeformt ist.

6. Flüssigkeitsfiltersystem nach einem der Ansprüche 1 bis 5, **dadurch gekennzeichnet, dass** die Ausnehmungen (43) in den ersten Formschlusselementen (42) und die zweiten Formschlusselemente (36) in einer nicht symmetrischen Winkelteilung angeordnet sind.

7. Flüssigkeitsfiltersystem nach Anspruch 6, **dadurch gekennzeichnet, dass** die durch die ersten und zweiten Formschlusselemente (42, 36) gebildeten Stege in einer symmetrischen Winkelteilung angeordnet sind.

8. Flüssigkeitsfiltersystem nach einem der Ansprüche 1 bis 7, **dadurch gekennzeichnet, dass** das Filterelement (19) an der Anströmseite der Ummantelung (16, 16') mit wenigstens einem Griffelement versehen ist.

9. Flüssigkeitsfiltersystem nach Anspruch 8, **dadurch gekennzeichnet, dass** das Griffelement aus zwei halbkreisförmigen Teilgriffelementen (71, 72) gebildet ist, die entlang eines Durchmessers des Filterelements an einem Folienscharnier (73) miteinander biegsam verbunden sind.

10. Flüssigkeitsfiltersystem nach einem der Ansprüche 1 bis 9, **dadurch gekennzeichnet, dass** das Filterelement (19) einen Filtereinsatzkörper aufweist, der aus einem semipermeablen Flächengebilde gewickelt ist, welches aus einer plissierten Filterlage besteht, die einseitig entlang ihrer Knickkanten mit einer Decklage verklebt ist.

11. Flüssigkeitsfiltersystem nach einem der Ansprüche 2 bis 10, **dadurch gekennzeichnet, dass** am Aufnahmekopf (61) wenigstens ein radial verschiebbarer, federnd gelagerter Rastbolzen (51) vorgesehen ist, der in eine bogenförmige Ausnehmung (62) hinein ragt und dass die Stege jeweils an wenigstens einer ihrer Seitenkanten eine Anschrägungsfläche (42.3) aufweisen, durch die der Rastbolzen auslenkbar ist.

## Claims

1. Liquid filter system, preferably an oil filter or fuel filter for an internal combustion engine, the said liquid filter system including a cup-shaped housing (11), which is connectable in a detachable manner to a receiving head (61), and a filter element (19), which is to be disposed in the housing (11), **characterised in that**
- the housing (11) is provided with first positive locking elements (42), which extend over at least one part of the outside circumference of the housing (11) and/or its bottom edge and
o which, in each case, are interrupted by at least one axially extending recess (43) or
o which include an axially extending recess laterally adjacent;
- and the filter element (19) includes a liquid-tight casing (16, 16'), which is provided on its outside and/or its bottom edge with second positive locking elements (36), which are insertable into the recesses (43) in the first positive locking elements (42) when the filter element is inserted into the housing (11).

2. Liquid filter system according to claim 1, **characterised in that** the first and second positive locking means in each case are complemented by an abutting inclination (42.4) to form a web that is disposed on the outside circumference of the housing (11) and is insertable into curved recesses (62) in the receiving head (61), wherein a bayonet connection is producible by means of the webs and the curved recesses (62).

3. Liquid filter system according to claim 1 or 2, **characterised in that** the outside diameter of the second positive locking elements (36) corresponds to the outside diameter of the first positive locking elements (42) and **in that** the length of the curve of the second positive locking elements (36) corresponds to the length of the curve of the recess (43) in the first positive locking elements (42).

4. Liquid filter system according to one of claims 1 to 3, **characterised in that** at least one annular sealing element (15') is disposed between the casing (16') of the filter element (1'9) and the housing (11).

5. Liquid filter system according to claim 4, **characterised in that** the annular sealing element, in the form of a sealing collar, is integrally formed on the outside circumference of the filter element from an elastomer material.

6. Liquid filter system according to one of claims 1 to 5, **characterised in that** the recesses (43) in the first positive locking elements (42) and the second positive locking elements (36) are disposed at a non symmetrical angular pitch.

7. Liquid filter system according to claim 6, **characterised in that** the webs that are formed by the first and second positive locking elements (42, 36) are disposed at a symmetrical angular pitch.

8. Liquid filter system according to one of claims 1 to 7, **characterised in that** the filter element (19) is provided on the inflow side of the casing (16, 16') with at least one handling element.

9. Liquid filter system according to claim 8, **characterised in that** the handling element is formed from two semi-circular part handling elements (71, 72), which are interconnected along a diameter of the filter element at a foil hinge (73) so as to be flexible.

10. Liquid filter system according to one of claims 1 to 9, **characterised in that** the filter element (19) includes a filter insert body, which is wound from a semi-permeable, planar formed body, which comprises a pleated filter layer, which is adhered on one side along its bending edges to a covering layer.

11. Liquid filter system according to one of claims 2 to 10, **characterised in that** at least one radially displaceable, resiliently mounted locking bolt (51) is provided on the receiving head (61), the said locking bolt extending into a curved recess (62), and **in that** the webs include, in each case, on at least one of their side edges an inclination face (42.3), by means of which the locking bolt is extendable.

## Revendications

1. Système de filtration pour liquides, de préférence filtre à huile ou filtre à carburant pour un moteur à combustion interne, comportant un boîtier (11) en forme de gobelet, qui peut être relié à une tête de préhension (61) de manière amovible, et un élément filtrant (19) à disposer dans le boîtier (11), **caractérisé en ce que**
- le boîtier (11) est pourvu de premiers éléments par complémentarité de formes (42) qui s'étendent sur au moins une partie de la périphérie extérieure du boîtier (11) et/ ou de son arête inférieure,
qui sont interrompus respectivement par au moins un évidement (43) axial, ou
qui présentent latéralement côte à côte un évidement axial;
et
- l'élément filtrant (19) présente une enveloppe étanche aux liquides (16, 16') qui est pourvue, sur son côté extérieur et/ou son arête inférieure de deuxièmes éléments par complémentarité de formes (36) qui peuvent être insérés dans les évidements (43) dans les premiers éléments par complémentarité de formes (42) lors de l'insertion de l'élément filtrant dans le boîtier (11).

2. Système de filtration pour liquides selon la revendication 1, **caractérisé en ce que** les premiers et deuxièmes moyens par complémentarité de formes se complètent pour former une entretoise, disposée sur la périphérie extérieure du boîtier (11), comportant un chanfrein de butée (42.4), lesquelles entretoises peuvent être insérées dans des évidements en arc de cercle (62) dans la tête de préhension (61), les entretoises et des évidements en arc de cercle (62) permettant d'établir une liaison à baïonnette.

3. Système de filtration pour liquides selon la revendication 1 ou la revendication 2, **caractérisé en ce que** le diamètre extérieur des deuxièmes éléments par complémentarité de formes (36) correspond au diamètre extérieur des premiers éléments par complémentarité de formes (42) et la longueur d'arc de cercle des deuxièmes éléments par complémentarité de formes (36) correspondent à la longueur d'arc de cercle de l'évidement (43) dans les premiers éléments par complémentarité de formes (42).

4. Système de filtration pour liquides selon l'une quelconque des revendications 1 à 3, **caractérisé en ce qu'**au moins une bague d'étanchéité (15') est disposée entre l'enveloppe (16') de l'élément filtrant (19) et le boîtier (11).

5. Système de filtration pour liquides selon la revendication 4, **caractérisé en ce que** la bague d'étanchéité est aménagée, en tant que collerette d'étanchéité en matière plastique élastomère, sur la périphérie extérieure de l'élément filtrant.

6. Système de filtration pour liquides selon l'une quelconque des revendications 1 à 5, **caractérisé en ce que** les évidements (43) dans les premiers éléments par complémentarité de formes (42) et dans les deuxièmes éléments par complémentarité de formes (36) sont répartis angulairement de façon non symétrique.

7. Système de filtration pour liquides selon la revendication 6, **caractérisé en ce que** les entretoises formées par les premiers et deuxièmes éléments par complémentarité de formes (42, 36) sont disposées dans une répartition angulaire symétrique.

8. Système de filtration pour liquides selon l'une quelconque des revendications 1 à 7, **caractérisé en ce que** l'élément filtrant (19) est pourvu d'au moins un élément de préhension sur le côté admission de l'enveloppe (16, 16').

9. Système de filtration pour liquides selon la revendication 8, **caractérisé en ce que** l'élément de préhension est constitué de deux éléments de préhension partiels demi-circulaires (71, 72) reliés entre eux de manière souple le long d'un diamètre de l'élément filtrant sur une charnière mince (73).

10. Système de filtration pour liquides selon l'une quelconque des revendications 1 à 9, **caractérisé en ce que** l'élément filtrant (19) présente un corps de cartouche filtrante enroulé à partir d'un élément plat semi-perméable, constitué d'une couche filtrante plissée collée à une couche de recouvrement d'un côté, le long de ses arêtes de pliage.

11. Système de filtration pour liquides selon l'une quelconque des revendications 2 à 10, **caractérisé en ce que** la tête de préhension (61) comporte au moins un ergot d'encliquetage (51) monté sur ressort et mobile radialement, qui s'engage dans un évidement en arc de cercle (62) et les entretoises présentent respectivement sur au moins l'une de leurs arêtes latérales, une face biseautée (42.3) qui dévie l'ergot vers l'extérieur.
